(19) **Europäisches Patentamt / European Patent Office / Office européen des brevets**

(11) **EP 3 185 433 A1**

(12) # EUROPEAN PATENT APPLICATION
published in accordance with Art. 153(4) EPC

(43) Date of publication:
**28.06.2017 Bulletin 2017/26**

(21) Application number: **16739009.5**

(22) Date of filing: **20.05.2016**

(51) Int Cl.:
*H04B 7/005* (2006.01)       *H04B 15/02* (2006.01)
*H04B 1/00* (2006.01)       *H04W 16/14* (2009.01)

(86) International application number:
**PCT/CN2016/082850**

(87) International publication number:
**WO 2017/080162 (18.05.2017 Gazette 2017/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **09.11.2015   CN 201510755492**

(71) Applicants:
• **LE Holdings (Beijing) Co., Ltd.**
**Beijing 100025 (CN)**

• **Leauto Intelligent Technology (BEIJING) Co. Ltd**
**Beijing 100020 (CN)**

(72) Inventors:
• **HAN, Wenlong**
**Beijing 100020 (CN)**
• **CHENG, Bo**
**Beijing 100020 (CN)**

(74) Representative: **Gosnall, Toby**
**Barker Brettell LLP**
**100 Hagley Road**
**Edgbaston**
**Birmingham**
**B16 8QQ (GB)**

(54) **RADIO FREQUENCY CONTROL METHOD AND DEVICE FOR MULTIPATH WIRELESS MODEM**

(57)     Disclosed are a radio-frequency control method and device for a multi-channel wireless modem. The multi-channel wireless modem includes N wireless modems. The radio-frequency control method includes: ranking the N wireless modems; acquiring a registration frequency of a first wireless modem; and for each n within 2≤n≤N, calculating an interference frequency of a n-th wireless modem based on the registration frequencies of the first wireless modem to the (n-1)-th wireless modem, and registering based on a frequency retrieved by the n-th wireless modem to obtain a registration frequency of the n-th wireless modem, where the registration frequency does not fall within a frequency range of the interference frequency.

Rank the N wireless modems. — S100

Acquire a registration frequency of a first wireless modem. — S101

For each n within 2≤n≤N, calculate an interference frequency of a n-th wireless modem based on the registration frequencies of the first wireless modem to the (n-1)-th wireless modem, and register based on a frequency retrieved by the n-th wireless modem to obtain a registration frequency of the n-th wireless modem, where the registration frequency does not fall within a frequency range of the interference frequency. — S102

Fig. 1

## Description

### CROSS-REFERENCE TO RELATED APPLICATIONS

This application is based upon and claims priority to Chinese Patent Application NO.201510755492.X, titled "radio-frequency control method and device for multi-channel wireless modem", filed November 9, 2015, the entire contents of which are incorporated herein by reference.

### TECHNICAL FIELD

The disclosure relates to the field of communication technology, and particularly to a radio-frequency control method and device for multi-channel wireless modem.

### BACKGROUD

Multiple modems in a multi-channel wireless modem product operate simultaneously, to improve an upload/download rate. Frequency bands allocated to domestic operators currently are adjacent, and frequencies of the frequency bands are close. Under limitation of a physical dimension of the product, antennas of the multiple modems interfere with each other when the modems operate simultaneously since that the antennas are close, thereby seriously interfering with sensitivity of a receiver and being unable to realize the objective to improve a transmission rate. Since that multiple modems may operate simultaneously, interference of a transmitter of a modem with a receiver of another modem is unavoidable. Signals in adjacent frequencies are received by the receiver according to a radio-frequency interference principle, thereby having an influence on quality of a signal to be received. In another aspect, multiple harmonics also has an influence on the reception.

### SUMMARY

In view of aforesaid problems, the disclosure is put forward to provide a radio-frequency control method and device for a multi-channel wireless modem to overcome aforesaid problems or at least partly solve aforesaid problems.

According to one aspect of the disclosure, it is provided a radio-frequency control method for a multi-channel wireless modem, the multi-channel wireless modem includes N wireless modems, the radio-frequency control method for multi-channel wireless modem includes:

ranking the N wireless modems;

acquiring a registration frequency of a first wireless modem; and

for each n within $2 \leq n \leq N$, calculating an interference frequency of a n-th wireless modem based on the registration frequencies of the first wireless modem to a (n-1)-th wireless modem, and registering based on a frequency retrieved by the n-th wireless modem to obtain a registration frequency of the n-th wireless modem, where the registration frequency does not fall within a frequency range of the interference frequency.

Optionally, the calculating the interference frequency of the n-th wireless modem based on the registration frequencies of the first wireless modem to the (n-1)-th wireless modem further includes:

calculating the interference frequency of the n-th wireless modem based on the registration frequencies of the first wireless modem to the (n-1)-th wireless modem according to a calculation formula for the interference frequency $F = a_1 f_1 \pm a_2 f_2 \pm a_3 f_3 ... \pm a_{n-1} f_{n-1}$, where $a_1 + a_2 + a_3 ... + a_{n-1} \leq 5$, $a_1$, $a_2$, $a_3 ... a_{n-1}$ are natural numbers, and $f_1$, $f_2$, $f_3 ... f_{n-1}$ are the registration frequencies of the first wireless modem to the (n-1)-th wireless modem respectively.

Optionally, the radio-frequency control method for multi-channel wireless modem further includes:

querying whether the interference frequency F calculated according to the calculation formula for the interference frequency $F = a_1 f_1 \pm a_2 f_2 \pm a_3 f_3 ... \pm a_{n-1} f_{n-1}$ is negative, where $a_1 + a_2 + a_3 ... + a_{n-1} \leq 5$, $a_1$, $a_2$, $a_3 ... a_{n-1}$ are natural numbers, and $f_1$, $f_2$, $f_3 ... f_{n-1}$ are the registration frequencies of the first wireless modem to the (n-1)-th wireless modem respectively; deleting a negative interference frequency F in a case that the interference frequency F is negative, and serving remaining interference frequencies F as interference frequencies of the n-th wireless modem.

Optionally, registration frequency not falling within the frequency range of the interference frequency further includes: the registration frequency not falling within a frequency band range having a preset threshold in which the interference frequency is a center frequency.

Optionally, the ranking the N wireless modems further includes:

ranking the N wireless modems based on a preset priority rule.

It is provided a radio-frequency control device for a multi-channel wireless modem according to another aspect of the disclosure, the multi-channel wireless modem includes N wireless modems, the radio-frequency control device for multi-channel wireless modem includes:

a ranking module configured to rank the N wireless modems;

an acquiring module configured to acquire a registration frequency of a first wireless modem; and

a calculating module configured to, for each n within $2 \leq n \leq N$, calculate an interference frequency of a n-th wireless modem based on the registration frequencies of the first wireless modem to a (n-1)-th wireless modem; and

a registering module configured to, for each n within $2 \leq n \leq N$, register based on a frequency retrieved by the n-th wireless modem to obtain a registration frequency of the n-th wireless modem, where the registration frequency does not fall within a frequency range of the interference frequency.

Optionally, the calculating module is further configured to, for each n within $2 \leq n \leq N$, calculate the interference frequency of the n-th wireless modem based on the registration frequencies of the first wireless modem to the (n-1)-th wireless modem according to a calculation formula for the interference frequency $F = a_1 f_1 \pm a_2 f_2 \pm a_3 f_3 ... \pm a_{n-1} f_{n-1}$, where $a_1 + a_2 + a_3 ... + a_{n-1} \leq 5$, $a_1, a_2, a_3 ... a_{n-1}$ are natural numbers, and $f_1, f_2, f_3 ... f_{n-1}$ are the registration frequencies of the first wireless modem to the (n-1)-th wireless modem respectively.

Optionally, the radio-frequency control device for multi-channel wireless modem further includes:

a querying module configured to query whether the interference frequency F calculated according to the calculation formula for the interference frequency $F = a_1 f_1 \pm a_2 f_2 \pm a_3 f_3 ... \pm a_{n-1} f_{n-1}$ is negative, where $a_1 + a_2 + a_3 ... + a_{n-1} \leq 5$, $a_1, a_2, a_3 ... a_{n-1}$ are natural numbers, and $f_1, f_2, f_3 ... f_{n-1}$ are the registration frequencies of the first wireless modem to the (n-1)-th wireless modem respectively; and

a deleting module configured to, in a case that the interference frequency F is negative, delete a negative interference frequency F and serve remaining interference frequencies F as interference frequencies of the n-th wireless modem.

Optionally, the registration frequency not falling within the frequency range of the interference frequency further includes: the registration frequency not falling within a frequency band range having a preset threshold in which the interference frequency is served as a center frequency.

Optionally, the ranking module is further configured to rank the N wireless modems based on a preset priority rule.

In the solution according to the disclosure, the N wireless modems are ranked, the registration frequency of the first wireless modem is acquired, for each n within $2 \leq n \leq N$, the interference frequency of the n-th wireless modem is calculated based on the registration frequencies of the first wireless modem to the (n-1)-th wireless modem, and registration is performed based on a frequency retrieved by the n-th wireless modem to obtain the registration frequency of the n-th wireless modem, where the registration frequency does not fall within the frequency range of the interference frequency. In this way, registration frequencies of the N wireless modems are different from each other, thereby avoiding co-channel interference and frequency doubling interference and improving sensitivity and a transmission rate of the multi-channel wireless modem.

Above description is only a summary of the technical scheme of the disclosure. In order to know the technical means of the disclosure more clearly so that it can be put into effect according to the content of the description, and to make aforesaid and other purpose, features and advantages of the disclosure clearer, the embodiments of the disclosure are listed below.

**BRIEF DESCRIPTION OF THE DRAWINGS**

By reading the detailed description of the preferably selected embodiments below, various other advantages and benefits become clear for a person of ordinary skill in the art. The drawings are only used for showing the purpose of the preferred embodiments and are not intended to limit the present invention. And in the whole drawings, same drawing reference signs are used for representing same components. In the drawings:

Figure 1 shows a flow diagram of a radio-frequency control method for a multi-channel wireless modem according to an embodiment of the disclosure;

Figure 2 shows a flow diagram of a radio-frequency control method for a multi-channel wireless modem according to another embodiment of the disclosure;

Figure 3 shows a structural block diagram of a radio-frequency control device for a multi-channel wireless modem according to an embodiment of the disclosure;

Figure 4 shows a structural block diagram of a radio-frequency control device for a multi-channel wireless modem according to an embodiment of the disclosure;

Figure 5 shows a block diagram of a computer device for executing a radio-frequency control method for a multi-channel wireless modem according to an embodiment of the disclosure;

Figure 6 shows a storage unit for storing or carrying a program code for implementing a radio-frequency control method for a multi-channel wireless modem according to an embodiment of the disclosure.

## DETAILED DESCRIPTION

The exemplary embodiments of the disclosure are described in further detail with reference to the drawings below. Although the exemplary embodiments of the disclosure are shown in the drawings, it should be understood that the disclosure can be implemented in various ways and is not limited by the embodiments described here. On the contrary, the embodiments are provided to understand the disclosure more clearly, and convey the scope of the disclosure to those skilled in the art completely.

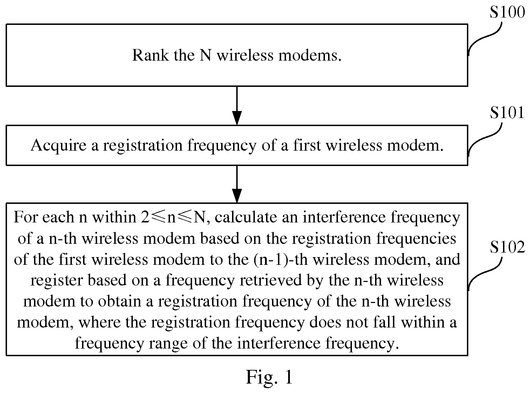

Figure 1 shows a flow diagram of a radio-frequency control method for a multi-channel wireless modem according to an embodiment of the disclosure. As shown in Figure 1, the radio-frequency control method includes step S100 to step S102.

In step S100, N wireless modems are ranked.

Normally, the multi-channel wireless modem includes N wireless modems. In order to obtain a registration frequency of each of the N wireless modems, the N wireless modems are ranked from a first wireless modem to a N-th wireless modem in the embodiment. The N wireless modems are registered in the ranking order.

In step S101, a registration frequency of the first wireless modem is acquired.

After the N wireless modems are ranked in step S100, the first wireless modem retrieves a frequency to be registered when performing network registration, and the frequency is allocated to the first wireless modem, to acquire the registration frequency of the first wireless modem.

In step S102, an interference frequency of the n-th wireless modem is calculated based on the registration frequencies of the first wireless modem to the (n-1)-th wireless modem. Registration is performed based on a frequency retrieved by the n-th wireless modem, to obtain a registration frequency of the n-th wireless modem. The registration frequency does not fall within a frequency range of the interference frequency. The step S102 is performed for each n within 2≤n≤N.

The interference frequency refers to a frequency of an undesired signal interfering with a receiver for a desired signal. In order to avoid mutual interference among the N wireless modems, the interference frequencies of the N wireless modems are calculated. The interference frequency is not selected when the network registration is performed.

Specifically, after the registration frequency of the first wireless modem is acquired, an interference frequency of a second wireless modem is calculated based on the registration frequency of the first wireless modem. A frequency range which is able to be registered is retrieved before the second wireless modem performs network registration, the frequency range which is able to be registered retrieved by the second wireless modem may include the calculated interference frequency of the second wireless modem. The second wireless modem will avoid registering a frequency within the frequency range of the interference frequency when the second wireless modem performs the network registration.

Step S102 is performed repeatedly until the registration frequency of the n-th wireless modem is acquired. Registration frequencies of the N wireless modems are different from each other in the embodiment, thereby avoiding co-channel interference and frequency doubling interference.

In the radio-frequency control method according to the embodiment of the disclosure described above, the N wireless modems are ranked, and the registration frequency of the first wireless modem is acquired, the interference frequency of the n-th wireless modem is calculated based on the registration frequencies of the first wireless modem to the (n-1)-th wireless modem, registration is performed based on the frequency retrieved by the n-th wireless modem for each n within 2≤n≤N, to obtain the registration frequency of the n-th wireless modem, the registration frequency does not fall within the frequency range of the interference frequency. In this way, the registration frequencies of the N wireless modems are different from each other, thereby avoiding co-channel interference and frequency doubling interference and improving sensitivity and a transmission rate of the multi-channel wireless modem.

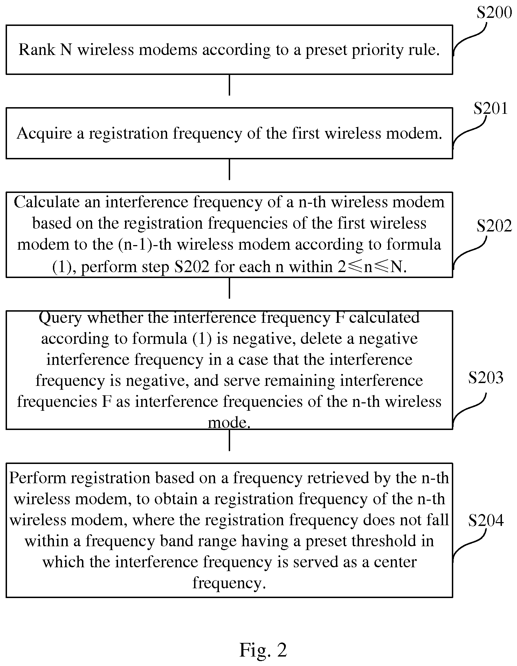

Figure 2 shows a flow diagram of a radio-frequency control method for a multi-channel wireless modem according to another embodiment of the disclosure. As shown in Figure 2, the radio-frequency control method includes step S200 to step S204.

In step S200, N wireless modems are ranked according to a preset priority rule.

Specifically, the preset priority rule means that, in a case that the wireless modems are classified according to a function, a priority order is set according to a function classification, and the N wireless modems are ranked according to the function classification.

In step S201, a registration frequency of a first wireless modem is acquired.

The N wireless modems are ranked in step S200. The first wireless modem retrieves a frequency that can be registered when performing network registration, and the frequency is allocated to the first wireless modem, to acquire the registration frequency of the first wireless modem. For example, the acquired registration frequency of the first wireless modem is 100.

In step S202, an interference frequency of a n-th wireless modem is calculated based on the registration frequencies of the first wireless modem to the (n-1)-th wireless modem according to a calculation formula for the interference frequency as follow:

$$F = a_1 f_1 \pm a_2 f_2 \pm a_3 f_3 ... \pm a_{n-1} f_{n-1} \qquad \text{formula (1)}$$

step S202 is performed for each n within 2≤n≤N.

where $a_1 + a_2 + a_3 ... + a_{n-1} \leq 5$, $a_1$, $a_2$, $a_3$... $a_{n-1}$ are natural numbers, and $f_1$, $f_2$, $f_3$... $f_{n-1}$ are the registration frequencies of the first wireless modem to the (n-1)-th wireless modem respectively.

Specifically, an interference frequency of the second wireless modem is calculated based on the registration frequency of the first wireless modem. In the formula described above, $a_2, a_3 ... a_{n-1}$, = 0 , $F = a_1 f_1$, $a_1 \leq 5$, and $a_1$ is a natural number, since that the frequency can not be equal to 0, five interference frequencies are obtained in a case that $a_1$ is equal to 1, 2, 3, 4 and 5. The interference frequency of the second wireless modem is equal to 100, 200, 300, 400 and 500 respectively by taking a case that the registration frequency of the first wireless modem is equal to 100 in step S201 as an example.

An interference frequency of a third wireless modem is calculated based on the registration frequency of the first wireless modem and a registration frequency of the second wireless modem. In the formula described above, $a_3, ... a_{n-1}$ = 0, $F = a_1 f_1 \pm a_2 f_2$, $a_1 + a_2 \leq 5$, and $a_1$ and $a_2$ are natural numbers, the interference frequency of the third wireless modem is calculated.

Interference frequencies of the N wireless modems are calculated respectively according to the formula described above.

In step S203, whether the interference frequency F calculated according to the calculation formula for the interference frequency $F = a_1 f_1 \pm a_2 f_2 \pm a_3 f_3 ... \pm a_{n-1} f_{n-1}$ is negative is queried, a negative interference frequency is deleted in a case that the interference frequency is negative, and remaining interference frequencies F are served as interference frequencies of the n-th wireless modem.

where $a_1 + a_2 + a_3 ... + a_{n-1} \leq 5$, $a_1$, $a_2$, $a_3$... $a_{n-1}$ are natural numbers, and $f_1$, $f_2$, $f_3 ... f_{n-1}$ are the registration frequencies of the first wireless modem to the (n-1)-th wireless modem respectively.

The interference frequency F calculated in step S202 may be negative. However, in an actual application, a frequency of the wireless modem can not be negative. Thus, the negative interference frequency calculated in step S202 is deleted, to avoid a case that the wireless modem can not operate in a case that the registration frequency allocated upon network registration is negative.

For example, the interference frequency of the third wireless modem is calculated according to the formula $F = a_1 f_1 - a_2 f_2$. The interference frequency of the third wireless modem is equal to -160 in a case that the registration frequency $f_1$ of the first wireless modem is equal to 100, the registration frequency of the second wireless modem is equal to 260 and both $a_1$ and $a_2$ are equal to 1. Since that the interference frequency of the third wireless modem is negative, which can not be suitable for the actual application, the interference frequency is deleted.

In step S204, registration is performed based on a frequency retrieved by the n-th wireless modem, to obtain a registration frequency of the n-th wireless modem. The registration frequency does not fall within a frequency band range having a preset threshold in which the interference frequency is served as a center frequency.

Specifically, the n-th wireless modem retrieves a frequency that can be registered. The interference frequency of the n-th wireless modem is obtained in step S203, and the registration frequency of the n-th wireless modem does not fall within the frequency range of the interference frequency, thereby avoiding registering the interference frequency.

In a case that the registration frequencies of the wireless modems are close to each other, mutual interference may occur. The interference frequency calculated in step S203 may be equal to the registration frequency of the wireless modem. Although it avoids the wireless modem from registering a frequency within the range of the interference frequency, the wireless modem can register a frequency close to the registration frequency of other wireless modem, and thus interfere with the other wireless modem. Therefore, the registration frequency should not fall within the frequency band range having the preset threshold in which the interference frequency is served as the center frequency. For example, the interference frequency is equal to 200, the registration frequency should not fall within a frequency band range from 190 to 210, thereby avoiding the wireless modem from registering a frequency within the frequency band range. Also, the frequency-band range having the preset threshold may be set according to actual application, and is not limited here.

In the radio-frequency control method according to the embodiment of the disclosure described above, the registration frequency of the n-th wireless modem is calculated according to the calculation formula for the interference frequency $F=a_1 f_1 \pm a_2 f_2 \pm a_3 f_3 \ldots \pm a_{n-1} f_{n-1}$, where $a_1 + a_2 + a_3 \ldots + a_{n-1} \leq 5$, $a_1$, $a_2$, $a_3 \ldots a_{n-1}$ are natural numbers, and $f_1$, $f_2$, $f_3 \ldots f_{n-1}$ are the registration frequencies of the first wireless modem to the (n-1)-th wireless modem respectively, whether the interference frequency is negative is queried, the negative interference frequency is deleted, and the remaining interference frequencies F are served as the interference frequencies of the n-th wireless modem, thereby avoiding a case that the wireless modem can not operate in a case that the registration frequency allocated upon network registration is negative. Registration is performed based on the frequency retrieved by the n-th wireless modem, to obtain the registration frequency of the n-th wireless modem, wherein the registration frequency does not fall within the frequency-band range having the preset threshold in which the interference frequency is served as the center frequency, thereby avoiding mutual interference in a case that other wireless modem registers a frequency close to a frequency of a certain wireless modem, and realizing that the registration frequencies of the N wireless modems are different from each other, and avoiding co-channel interference and frequency doubling interference and improving sensitivity and a transmission rate of the multi-channel wireless modem.

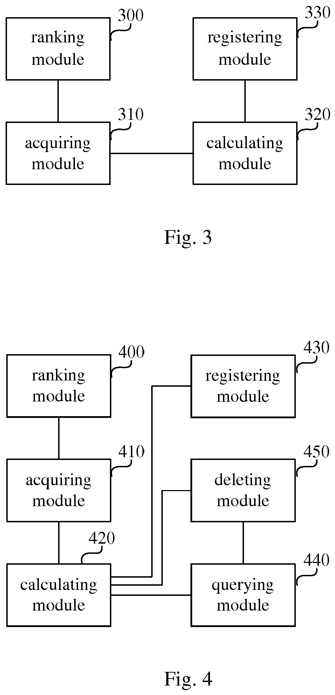

Figure 3 shows a structural block diagram of a radio-frequency control device for a multi-channel wireless modem according to an embodiment of the disclosure. The multi-channel wireless modem includes N wireless modems. As shown in Figure 3, the radio-frequency control device includes a ranking module 300, an acquiring model 310, a calculating module 320 and a registering module 330.

The ranking module 300 is configured to rank the N wireless modems.

The acquiring module 310 is configured to acquire a registration frequency of a first wireless modem.

The calculating module 320 is configured to calculate an interference frequency of a n-th wireless modem based on the registration frequencies of the first wireless modem to the (n-1)-th wireless modem.

The registering module 330 is configured to, for each n within $2 \leq n \leq N$, register based on a frequency retrieved by the n-th wireless modem, to obtain a registration frequency of the n-th wireless modem, where the registration frequency does not fall within a frequency range of the interference frequency.

In the radio-frequency control device according to the embodiment of the disclosure described above, the N wireless modems are ranked, and the registration frequency of the first wireless modem is acquired, for each n within $2 \leq n \leq N$, the interference frequency of the n-th wireless modem is calculated based on the registration frequencies of the first wireless modem to the (n-1)-th wireless modem, registration is performed based on the frequency retrieved by the n-th wireless modem, to obtain the registration frequency of the n-th wireless modem, and the registration frequency does not fall within the frequency range of the interference frequency. In this way, the registration frequencies of the N wireless modems are different from each other, thereby avoiding co-channel interference and frequency doubling interference and improving sensitivity and a transmission rate of the multi-channel wireless modem.

Figure 4 shows a structural block diagram of a radio-frequency control device for a multi-channel wireless modem according to an embodiment of the disclosure. As shown in Figure 4, the radio-frequency control device includes a ranking module 400, an acquiring module 410, a calculating module 420 and a registering module 430.

The ranking module 400 is configured to rank N wireless modems,

The acquiring module 410 is configured to acquire a registration frequency of a first wireless modem.

The calculating module 420 is configured to calculate an interference frequency of a n-th wireless modem based on the registration frequencies of the first wireless modem to the (n-1)-th wireless modem.

Optionally, the calculating module is further configured to calculate the interference frequency of the n-th wireless modem based on the registration frequencies of the first wireless modem to the (n-1)-th wireless modem according to a calculation formula for the interference frequency:

$$F = a_1 f_1 \pm a_2 f_2 \pm a_3 f_3 ... \pm a_{n-1} f_{n-1}$$

where $a_1 + a_2 + a_3... + a_{n-1} \leq 5$, $a_1$, $a_2$, $a_3... a_{n-1}$ are natural numbers, and $f_1$, $f_2$, $f_3...f_{n-1}$ are the registration frequencies of the first wireless modem to the (n-1)-th wireless modem respectively.

The registering module 430 is configured to, for each n within $2 \leq n \leq N$, register based on a frequency retrieved by the n-th wireless modem, to obtain a registration frequency of the n-th wireless modem, where the registration frequency does not fall within a frequency range of the interference frequency.

Optionally, the registration frequency does not fall within a frequency band range having a preset threshold in which the interference frequency is served as a center frequency.

Optionally, the radio-frequency control device further includes a querying module 440 and a deleting module 450. The querying module 440 is configured to query whether the interference frequency F calculated according to the calculation formula for the interference frequency $F = a_1 f_1 \pm a_2 f_2 \pm a_3 f_3... \pm a_{n-1} f_{n-1}$ is negative, where $a_1 + a_2 + a_3... + a_{n-1} \leq 5$, $a_1$, $a_2$, $a_3 ... a_{n-1}$ are natural numbers, and $f_1$, $f_2$, $f_3...f_{n-1}$ are the registration frequencies of the first wireless modem to the (n-1)-th wireless modem respectively.

The deleting module 450 is configured to delete the negative interference frequency in a case that the interference frequency F is negative, and serve remaining interference frequencies F as interference frequencies of the n-th wireless modem.

Optionally, the ranking module 400 is further configured to rank the N wireless modems based on a preset priority rule.

In the radio-frequency control device according to the embodiment of the disclosure described above, the registration frequency of the n-th wireless modem is calculated according to the calculation formula for the interference frequency $F = a_1 f_1 \pm a_2 f_2 \pm a_3 f_3... \pm a_{n-1} f_{n-1}$, where $a_1 + a_2 + a_3... + a_{n-1} \leq 5$, $a_1$, $a_2$, $a_3... a_{n-1}$ are natural numbers, and $f_1$, $f_2$, $f_3...f_{n-1}$ are the registration frequencies of the first wireless modem to the (n-1)-th wireless modem respectively, whether the interference frequency is negative is queried, and the negative interference frequency is deleted, and the remaining interference frequencies are served as the interference frequency of the n-th wireless modem, thereby avoiding a case that the wireless modem can not operate in a case that the registration frequency allocated upon network registration is negative. Registration is performed based on the frequency retrieved by the n-th wireless modem, to obtain the registration frequency of the n-th wireless modem. The registration frequency does not fall within the frequency-band range having the preset threshold in which the interference frequency is served as the center frequency, thereby avoiding mutual interference in a case that other wireless modem registers a frequency close to a frequency of a certain wireless modem, realizing that the registration frequencies of the N wireless modems are different from each other, and avoiding co-channel interference and frequency doubling interference and improving sensitivity and a transmission rate of the multi-channel wireless modem.

The algorithm and display provided here have no inherent relation with any specific computer, virtual system or other devices. Various general-purpose systems can be used together with the teaching based on this. According to the description above, the structure required to construct this kind of system is obvious. Besides, the disclosure is not directed at any specific programming language. It should be understood that various programming language can be used for achieving the content of the disclosure described here, and above description of specific language is for disclosing the optimum embodiment of the disclosure.

The description provided here explains plenty of details. However, it can be understood that the embodiments of the disclosure can be implemented without these specific details. The known methods, structure and technology are not shown in detail in some embodiments, so as not to obscure the understanding of the description.

Similarly, it should be understood that in order to simplify the present disclosure and help to understand one or more of the various aspects of the disclosure, the various features of the disclosure are sometimes grouped into a single embodiment, drawing, or description thereof. However, the method disclosed should not be explained as reflecting the following intention: that is, the disclosure sought for protection claims more features than the features clearly recorded in every claim. To be more precise, as is reflected in the following claims, the aspects of the disclosure are less than all the features of a single embodiment disclosed before. Therefore, the claims complying with a specific embodiment are explicitly incorporated into the specific embodiment thereby, wherein every claim itself as an independent embodiment of the disclosure.

Those skilled in the art can understand that adaptive changes can be made to the modules of the devices in the embodiment and the modules can be installed in one or more devices different from the embodiment. The modules or units or elements in the embodiment can be combined into one module or unit or element, and furthermore, they can be separated into more sub-modules or sub-units or sub-elements. Except such features and/or process or that at least some in the unit are mutually exclusive, any combinations can be adopted to combine all the features disclosed by the description (including the attached claims, abstract and figures) and any method or all process of the device or unit disclosed as such. Unless there is otherwise explicit statement, every feature disclosed by the present description (including the attached claims, abstract and figures) can be replaced by substitute feature providing the same, equivalent or similar purpose.

In addition, a person skilled in the art can understand that although some embodiments described here comprise some features instead of other features included in other embodiments, the combination of features of different embodiments means falling into the scope of the disclosure and forming different embodiments. For example, in the following claims, any one of the embodiments sought for protection can be used in various combination modes.

The various components embodiments of the disclosure can be realized by hardware, or realized by software modules running on one or more processors, or realized by combination thereof. A person skilled in the art should understand that microprocessor or digital signal processor (DSP) can be used for realizing some or all functions of some or all components of the devices according to the embodiments in the disclosure in practice. The disclosure can also realize one part of or all devices or programs (for example, computer programs and computer program products) used for carrying out the method described here. Such programs for realizing the disclosure can be stored in computer readable medium, or can possess one or more forms of signal. Such signals can be downloaded from the Internet website or be provided at signal carriers, or be provided in any other forms.

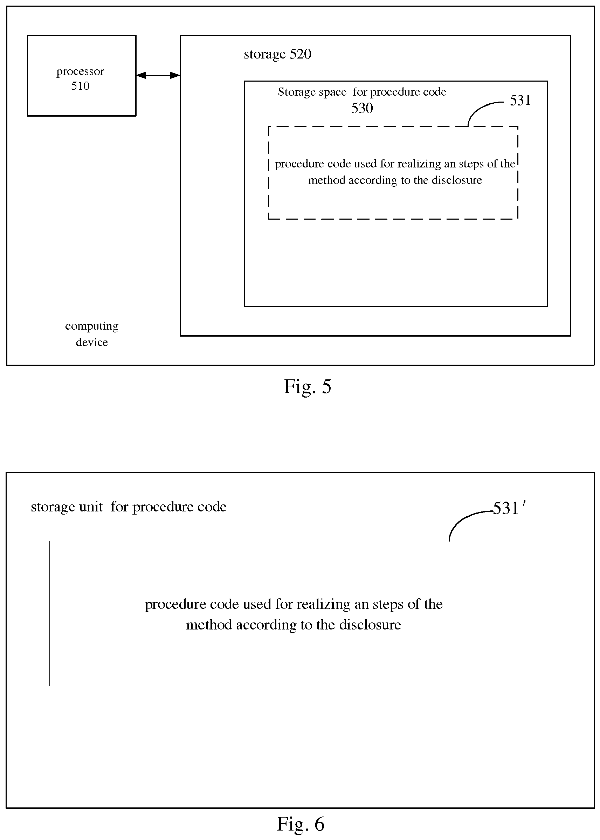

For example, Figure 5 shows a computing device for executing the radio-frequency control method for the multi-channel wireless modem according to the disclosure. The computing device traditionally includes a processor 510 and a computer program product in the form of storage 520 or a computer readable medium. The storage 520 can be electronic storage such as flash memory, EEPROM (Electrically Erasable Programmable Read -Only Memory), EPROM, hard disk or ROM, and the like. Storage 520 possesses storage space 530 for carrying out procedure code 531 of any steps of aforesaid method. For example, storage space 530 for procedure code can comprise various procedure codes 531 used for realizing any steps of aforesaid method. These procedure codes can be read out from one or more computer program products or write in one or more computer program products. The computer program products comprise procedure code carriers such as hard disk, Compact Disc (CD), memory card or floppy disk and the like. These computer program products usually are portable or fixed storage cell as said in Figure 6. The storage cell can possess memory paragraph, storage space like the storage 520 in the computing device in Figure 5. The procedure code can be compressed in, for example, a proper form. Generally, the storage cell includes computer readable code 531' i.e. the code can be read by processors such as 510 and the like for executing the steps in the method according to the disclosure. When the codes run on a computer device, the computer device will carry out various steps of the method described above.

It should be noticed that the embodiments are intended to illustrate the disclosure and not limit this disclosure, and a person skilled in the art can design substitute embodiments without departing from the scope of the appended claims. In the claims, any reference marks between brackets should not be constructed as limit for the claims. The word "comprise" does not exclude elements or steps that are not listed in the claims. The word "a" or "one" before the elements does not exclude that more such elements exist. The disclosure can be realized by means of hardware comprising several different elements and by means of properly programmed computer. In the unit claims in which several devices are listed, several of the devices can be embodied by a same hardware item. The use of words first, second and third does not mean any sequence. These words can be explained as name.

## Claims

1. A radio-frequency control method for a multi-channel wireless modem, wherein the multi-channel wireless modem comprises N wireless modems, the radio-frequency control method comprises:

    ranking the N wireless modems;
    acquiring a registration frequency of a first wireless modem; and
    for each n within $2 \leq n \leq N$, calculating an interference frequency of a n-th wireless modem based on the registration frequencies of the first wireless modem to a (n-1)-th wireless modem, and registering based on a frequency retrieved by the n-th wireless modem to obtain a registration frequency of the n-th wireless modem, wherein the registration frequency does not fall within a frequency range of the interference frequency.

2. The radio-frequency control method according to claim 1, wherein the calculating the interference frequency of the n-th wireless modem based on the registration frequencies of the first wireless modem to the (n-1)-th wireless modem further comprises:

    calculating the interference frequency of the n-th wireless modem based on the registration frequencies of the first wireless modem to the (n-1)-th wireless modem according to a calculation formula for the interference frequency $F = a_1 f_1 \pm a_2 f_2 \pm a_3 f_3 ... \pm a_{n-1} f_{n-1}$, where $a_1 + a_2 + a_3 ... + a_{n-1} \leq 5$, $a_1, a_2, a_3 ... a_{n-1}$ are natural numbers,

and $f_1$, $f_2$, $f_3$...$f_{n-1}$ are the registration frequencies of the first wireless modem to the (n-1)-th wireless modem respectively.

3. The radio-frequency control method according to claim 2, further comprising:

   querying whether the interference frequency F calculated according to the calculation formula for the interference frequency $F=a_1f_1 \pm a_2f_2 \pm a_3f_3... \pm a_{n-1}f_{n-1}$ is negative, where $a_1 + a_2 + a_3 ... + a_{n-1} \leq 5$, $a_1$, $a_2$, $a_3$ ...$a_{n-1}$ are natural numbers, and $f_1$, $f_2$, $f_3$... $f_{n-1}$ are the registration frequencies of the first wireless modem to the (n-1)-th wireless modem respectively; deleting a negative interference frequency F in a case that the interference frequency F is negative, and serving remaining interference frequencies F as interference frequencies of the n-th wireless modem.

4. The radio-frequency control method according to any one of claims 1 to 3, wherein registration frequency not falling within the frequency range of the interference frequency further comprises: the registration frequency not falling within a frequency band range having a preset threshold in which the interference frequency is a center frequency.

5. The radio-frequency control method according to any one of claims 1 to 4, wherein the ranking the N wireless modems further comprises:

   ranking the N wireless modems based on a preset priority rule.

6. A radio-frequency control device for a multi-channel wireless modem, wherein the multi-channel wireless modem comprises N wireless modems, the radio-frequency control device comprises:

   a ranking module configured to rank the N wireless modems;
   an acquiring module configured to acquire a registration frequency of a first wireless modem; and
   a calculating module configured to, for each n within $2 \leq n \leq N$, calculate an interference frequency of a n-th wireless modem based on the registration frequencies of the first wireless modem to a (n-1)-th wireless modem; and
   a registering module configured to, for each n within $2 \leq n \leq N$, register based on a frequency retrieved by the n-th wireless modem to obtain a registration frequency of the n-th wireless modem, wherein the registration frequency does not fall within a frequency range of the interference frequency.

7. The radio-frequency control device according to claim 6, wherein the calculating module is further configured to, for each n within $2 \leq n \leq N$, calculate the interference frequency of the n-th wireless modem based on the registration frequencies of the first wireless modem to the (n-1)-th wireless modem according to a calculation formula for the interference frequency $F=a_1f_1 \pm a_2f_2 \pm a_3f_3... \pm a_{n-1}f_{n-1}$, where $a_1 + a_2 + a_3 ... + a_{n-1} \leq 5$, $a_1$, $a_2$, $a_3$ ... $a_{n-1}$ are natural numbers, and $f_1$, $f_2$, $f_3$... $f_{n-1}$ are the registration frequencies of the first wireless modem to the (n-1)-th wireless modem respectively.

8. The radio-frequency device according to claim 7, further comprising:

   a querying module configured to query whether the interference frequency F calculated according to the calculation formula for the interference frequency $F=a_1f_1 \pm a_2f_2 \pm a_3f_3 ... \pm a_{n-1}f_{n-1}$ is negative, where $a_1 + a_2 + a_3 ... + a_{n-1} \leq 5$, $a_1$, $a_2$, $a_3$ ...$a_{n-1}$ are natural numbers, and $f_1$, $f_2$, $f_3$... $f_{n-1}$ are the registration frequencies of the first wireless modem to the (n-1)-th wireless modem respectively; and
   a deleting module configured to, in a case that the interference frequency F is negative, delete a negative interference frequency F and serve remaining interference frequencies F as interference frequencies of the n-th wireless modem.

9. The radio-frequency control device according to any one of claims 6 to 8, wherein registration frequency not falling within the frequency range of the interference frequency further comprises: the registration frequency not falling within a frequency band range having a preset threshold in which the interference frequency is served as a center frequency.

10. The radio-frequency control device according to any one of claims 6 to 9, wherein the ranking module is further configured to rank the N wireless modems based on a preset priority rule.

Rank the N wireless modems.

S100

Acquire a registration frequency of a first wireless modem.

S101

For each n within $2 \leqslant n \leqslant N$, calculate an interference frequency of a n-th wireless modem based on the registration frequencies of the first wireless modem to the (n-1)-th wireless modem, and register based on a frequency retrieved by the n-th wireless modem to obtain a registration frequency of the n-th wireless modem, where the registration frequency does not fall within a frequency range of the interference frequency.

S102

Fig. 1

S200

Rank N wireless modems according to a preset priority rule.

S201

Acquire a registration frequency of the first wireless modem.

Calculate an interference frequency of a n-th wireless modem based on the registration frequencies of the first wireless modem to the (n-1)-th wireless modem according to formula (1), perform step S202 for each n within $2 \leqslant n \leqslant N$.

S202

Query whether the interference frequency F calculated according to formula (1) is negative, delete a negative interference frequency in a case that the interference frequency is negative, and serve remaining interference frequencies F as interference frequencies of the n-th wireless mode.

S203

Perform registration based on a frequency retrieved by the n-th wireless modem, to obtain a registration frequency of the n-th wireless modem, where the registration frequency does not fall within a frequency band range having a preset threshold in which the interference frequency is served as a center frequency.

S204

Fig. 2

Fig. 3

Fig. 4

processor
510

storage 520

Storage space for procedure code
530

531

procedure code used for realizing an steps of the
method according to the disclosure

computing
device

Fig. 5

storage unit for procedure code

531′

procedure code used for realizing an steps of the
method according to the disclosure

Fig. 6

## INTERNATIONAL SEARCH REPORT

| | International application No. |
| --- | --- |
| | **PCT/CN2016/082850** |

**A.   CLASSIFICATION OF SUBJECT MATTER**

H04B 7/005 (2006.01) i

According to International Patent Classification (IPC) or to both national classification and IPC

**B.   FIELDS SEARCHED**

Minimum documentation searched (classification system followed by classification symbols)

H04B; H04Q; H04W

Documentation searched other than minimum documentation to the extent that such documents are included in the fields searched

Electronic data base consulted during the international search (name of data base and, where practicable, search terms used)

CNPAT, CNKI, WPI, EPODOC: frequency band, frequency point, frequency spectrum, registration, determine, choose, use, network access, modulation, demodulation, network card, model, radio frequency, coexistence, frequency multiplication, frequency, interference, disturb+, distort+, multi, more than, at least, double, dual, modem, radio, mode, intermodulation, mutual, crosstalk, cross, harmonic, multiple

**C.   DOCUMENTS CONSIDERED TO BE RELEVANT**

| Category* | Citation of document, with indication, where appropriate, of the relevant passages | Relevant to claim No. |
| --- | --- | --- |
| X | CN 1842188 A (LENOVO (BEIJING) CO., LTD.), 04 October 2006 (04.10.2006), description, page 2, paragraph 4 to page 3, paragraph 7 | 1, 4-6, 9-10 |
| Y | CN 1842188 A (LENOVO (BEIJING) CO., LTD.), 04 October 2006 (04.10.2006), description, page 2, paragraph 4 to page 3, paragraph 7 | 2-3, 7-8 |
| X | CN 1937439 A (BROADCOM CORP.), 28 March 2007 (28.03.2007), description, page 3, paragraphs 2-6 and page 10, paragraph 3 | 1, 4-6, 9-10 |
| Y | CN 1937439 A (BROADCOM CORP.), 28 March 2007 (28.03.2007), description, page 3, paragraphs 2-6 and page 10, paragraph 3 | 2-3, 7-8 |
| Y | CN 102684799 A (XIDIAN UNIVERSITY), 19 September 2012 (19.09.2012), description, paragraphs [0002] and [0022]-[0027] | 2-3, 7-8 |
| A | CN 102438248 A (SHANGHAI JIAO TONG UNIVERSITY), 02 May 2012 (02.05.2012), the whole document | 1-10 |

☒ Further documents are listed in the continuation of Box C.     ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 20 July 2016 (20.07.2016) | **22 August 2016 (22.08.2016)** |

| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>**ZHANG, Feng**<br><br>Telephone No.: (86-10) **62413247** |

Form PCT/ISA/210 (second sheet) (July 2009)

## INTERNATIONAL SEARCH REPORT

| International application No. |
| --- |
| **PCT/CN2016/082850** |

**C (Continuation).      DOCUMENTS CONSIDERED TO BE RELEVANT**

| Category* | Citation of document, with indication, where appropriate, of the relevant passages | Relevant to claim No. |
| --- | --- | --- |
| A | US 2003125019 A1 (BAJIKAR, S.M.), 03 July 2003 (03.07.2003), the whole document | 1-10 |

Form PCT/ISA/210 (continuation of second sheet) (July 2009)

## INTERNATIONAL SEARCH REPORT
### Information on patent family members

International application No.

**PCT/CN2016/082850**

| Patent Documents referred in the Report | Publication Date | Patent Family | Publication Date |
|---|---|---|---|
| CN 1842188 A | 04 October 2006 | JP 2008535332 A | 28 August 2008 |
| | | WO 2006102814 A1 | 05 October 2006 |
| | | US 2009296785 A1 | 03 December 2009 |
| CN 1937439 A | 28 March 2007 | US 2011319023 A1 | 29 December 2011 |
| | | US 2006281408 A1 | 14 December 2006 |
| | | EP 1732273 A1 | 13 December 2006 |
| | | US 2010081384 A1 | 01 April 2010 |
| | | US 2013012130 A1 | 10 January 2013 |
| CN 102684799 A | 19 September 2012 | None | |
| CN 102438248 A | 02 May 2012 | None | |
| US 2003125019 A1 | 03 July 2003 | None | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 201510755492X